(19) Europäisches Patentamt
European Patent Office
Office européen des brevets

(11) Veröffentlichungsnummer: **0 467 168 A2**

(12) # EUROPÄISCHE PATENTANMELDUNG

(21) Anmeldenummer: **91111178.9**

(22) Anmeldetag: **05.07.91**

(51) Int. Cl.5: **C08G 18/62**, C09D 175/04, D06M 15/564

(30) Priorität: **16.07.90 DE 4022602**

(43) Veröffentlichungstag der Anmeldung: **22.01.92 Patentblatt 92/04**

(84) Benannte Vertragsstaaten: **BE CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Rau, Maria Gyopar, Dr.**
**Kaiserslauterer Strasse 36**
**W-6702 Bad Duerkheim(DE)**
Erfinder: **Blum, Rainer**
**Bannwasserstrasse 58**
**W-6700 Ludwigshafen(DE)**
Erfinder: **Louis, Gerd, Dr.**
**Am Talhaus 21**
**W-6719 Carlsberg(DE)**

(54) **Wässrige Zubereitungen aus Copolymerlatices und Polyisocyanat-Dispersionen.**

(57) Wäßrige Zubereitungen aus Copolymerlatices und Polyisocyanat-Dispersionen, enthaltend
A) 5 bis 40 Gew.-% wenigstens eines Kunstharzes aus
(a) 0,1 bis 20 Gew.-Teilen eines oder mehrerer monoolefinisch ungesättigter Monomerer, welche mindestens eine mit Isocyanaten reaktionsfähige Gruppe tragen, und
(b) 80 bis 99,9 Gew.-Teilen eines oder mehrerer mit (a) copolymerisierbarer mono- oder diolefinisch ungesättigter Monomerer ohne acide Wasserstoffatome,
B) 0,5 bis 5 Gew.-% wenigstens eines feinteiligen, stabilisierten Polyisocyanates,
C) wirksame Mengen an Dispergiermitteln und
D) 5 bis 40 Gew.-% wenigstens eines feinteiligen Füllstoffes.
Die wäßrigen Zubereitungen dienen als Beschichtungsmittel für gewebte und nichtgewebte Untergründe.

EP 0 467 168 A2

Die vorliegende Erfindung betrifft neue wäßrige Zubereitungen aus Copolymerlatices und Polyisocyanat-Dispersionen, enthaltend

A) 5 bis 40 Gew.-% wenigstens eines Kunstharzes aus
   (a) 0,1 bis 20 Gew.-Teilen eines oder mehrerer monoolefinisch ungesättigter Monomerer, welche mindestens eine mit Isocyanaten reaktionsfähige Gruppe tragen, und
   (b) 80 bis 99,9 Gew.-Teilen eines oder mehrerer mit (a) copolymerisierbarer, mono- oder diolefinisch ungesättigter Monomerer ohne acide Wasserstoffatome,
B) 0,5 bis 5 Gew.-% wenigstens eines feinteiligen, stabilisierten Polyisocyanates,
C) wirksame Mengen an Dispergiermitteln und
D) 5 bis 40 Gew.-% wenigstens eines feinteiligen Füllstoffes.

Weiterhin betrifft die Erfindung ein Verfahren zur Herstellung dieser wäßrigen Zubereitungen sowie ihre Verwendung als Beschichtungsmittel für gewebte und nichtgewebte Untergründe.

Beschichtungsmittel oder Bindemittel für Untergründe, insbesondere textile gewebte Untergründe, haben die Aufgabe, dem Untergrund verbesserte Eigenschaften für die Anwendung zu verleihen. Die wichtigsten Aufgaben eines Bindemittels sind Erhöhung der mechanischen Festigkeit, ohne die Steifigkeit deutlich zu ändern, und die Reduzierung der Wasserempfindlichkeit, d.h. die Erhöhung der Naßfestigkeit.

Die Kombination von Polyisocyanaten mit Polymerisaten, die mit Isocyanatgruppen reaktionsfähige Gruppen enthalten, ist für diesen Zweck bekannt.

Große Schwierigkeiten bereitet jedoch die Tatsache, daß die Isocyanatgruppen schon bei Raumtemperatur mit den vorgesehenen Reaktionspartnern, z.B. Alkoholen, Aminen oder Carbonsäureamiden reagieren; das bedeutet, es lassen sich keine lagerstabilen Kombinationen formulieren.

Um diese Schwierigkeit zu umgehen, werden häufig Zweikomponentensysteme verwendet. Die Reaktionspartner werden dabei in separaten Zubereitungen aufbewahrt und erst unmittelbar vor der Applikation gemischt, worauf die Reaktion dann spontan oder wärme- und/oder katalysatorbeschleunigt abläuft, wie z.B. in der US-A 4 029 626 (1) beschrieben.

Die Nachteile dieses Verfahrens liegen in der Notwendigkeit der getrennten Zubereitung und Lagerung der beiden Komponenten, der Schwierigkeiten beim genauen Dosieren und guten Mischen vor der Applikation und in der Gefahr der Verstopfung der Misch- und Applikationsgeräte durch frühzeitige Reaktion. Durch diese Methode sind außerdem keine wäßrigen Bindemittelsysteme erhältlich, da das Wasser einen Reaktionspartner für Isocyanate darstellt.

Stabile Systeme lassen sich formulieren, wenn die Polyisocyanate zunächst mit einem monofunktionellen Reaktionspartner umgesetzt werden. Die erhaltenen Addukte werden als verkappte oder blockierte Isocyanate bezeichnet, wenn sie weniger thermostabil sind als die Produkte der später auf dem Gewebe bzw. Untergrund beabsichtigten Vernetzungsreaktion. Unter Hitzeeinwirkung wird das Verkappungsmittel abgespalten und das Polyisocyanat geht unter Vernetzung die thermostabilere Bindung ein.

Ein Beispiel solch einer Entwicklung stellt die Literaturstelle DE-A 24 54 253 (2) dar. Hierin werden Copolymerisate aus Acrylat- und/oder Vinylidenmonomeren beschrieben, die durch Block-, Suspensions-, Lösungs- oder Emulsionspolymerisation von ethylenisch ungesättigten blockierten aromatischen Diisocyanaten hergestellt werden. Als Blockierungsmittel für die Isocyanatgruppen dienen Oxime, Benzimidazol, Pyrazole, Benztriazole, Caprolactam, Thiocaprolactam und p-Nitroanilin. Die geforderte Naßfestigkeit wird durch Vernetzung oder Vulkanisation dieser Copolymerisate erreicht.

Diese Methode hat den Nachteil, daß die ethylenisch ungesättigten blockierten Isocyanate in einem aufwendigem Dreistufenprozeß hergestellt werden müssen, mit allen Problemen der Zwischenisolierung, Reinigung und Verfahrensoptimierungen. Weiterhin ist die Stabilität dieser blockierten Isocyanate Angelpunkt für die Reaktivität (Vernetzungseffektivität) und für die Lagerstabilität. Vor allem werden technische und wirtschaftliche Nachteile solcher Formulierungen durch das abgespaltene Verkappungsmittel verursacht, das, wenn es in der vernetzten Masse verbleibt, deren Eigenschaften verändert, oder, wenn es verdampft, zurückgewonnen oder zumindest aus der Abluft entfernt werden muß.

Die EP-A 204 970 (3) betrifft ein Verfahren zur Herstellung stabiler Dispersionen feinteiliger Polyisocyanate. In der EP-B 212 511 (4) wird die Verwendung derartiger stabiler Polyisocyanat-Dispersionen als Vernetzer in Textilpigmentdruckpasten und Färbeflotten beschrieben.

Der vorliegenden Erfindung lag die Aufgabe zugrunde, Beschichtungsmittel für gewebte und nichtgewebte Untergründe auf wäßriger Basis bereitzustellen, die die geschilderten Nachteile des Standes der Technik nicht mehr aufweisen.

Demgemäß wurden die eingangs definierten wäßrigen Zubereitungen aus Copolymerlatices mit isocyanatreaktiven funktionellen Gruppen und wäßrigen stabilen Polyisocyanat-Dispersionen gefunden.

Unter mit Isocyanaten reaktionsfähigen Gruppen sind im wesentlichen Gruppen mit aciden Wasserstoffatomen zu verstehen, insbesondere sind hier die Hydroxyl-, Amino-, Carboxyl- und Carboxyamido-Gruppe

zu nennen.

Den in den Copolymerlatices enthaltenen Kunstharzen A liegen als Monomere (a) vor allem Verbindungen der allgemeinen Formel I

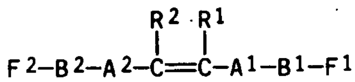

I

zugrunde, in der die Variablen folgende Bedeutung haben

$R^1$, $R^2$ Wasserstoff, Methyl oder Ethyl,

$A^1$, $A^2$ o-, m- oder p-Phenylen, eine divalente Gruppierung der Formel

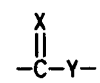

wobei X und Y für O, S, NH, $NCH_3$ oder $NC_2H_5$ stehen und das C-Atom direkt mit der olefinischen Doppelbindung verknüpft ist, oder eine Einfachbindung,

$B^1$, $B^2$ $C_1$- bis $C_{18}$-Alkylengruppen, die durch ein oder mehrere nicht benachbarte Sauerstoffatome unterbrochen sein und zusätzlich eine Hydroxyl- oder eine Aminogruppe tragen können, oder eine Einfachbindung,

$F^1$, $F^2$ Wasserstoff, $C_1$- bis $C_{18}$-Alkylgruppen, die durch ein oder mehrere nicht benachbarte Sauerstoffatome unterbrochen sein und zusätzlich eine Hydroxyl- oder eine Aminogruppe tragen können, sowie Reste der Formeln

$-Y-R^3$, 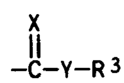 oder 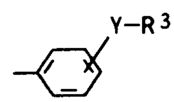

wobei $R^3$ Wasserstoff oder eine $C_1$- bis $C_{18}$-Alkylgruppe, die durch ein oder mehrere nicht benachbarte Sauerstoffatome unterbrochen sein und zusätzlich eine Hydroxyl- oder eine Aminogruppe tragen kann, bezeichnet,

wobei die Gruppierungen $A^1$ und $A^2$ oder $A^1$ und $F^2$ über Y als Brückenglied zu einem fünf- oder sechsgliedrigem Ring verknüpft sein können, mit der Maßgabe, daß die Verbindung I mindestens eine mit Isocyanaten reaktionsfähige Gruppe trägt.

In einer besonders bevorzugten Ausführungsform ist das Monomer (a) eine Verbindung der allgemeinen Formel Ia oder Ib

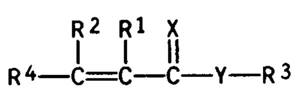

Ia

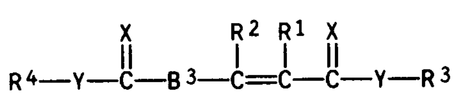

Ib

in denen die Variablen folgende Bedeutungen haben

$R^3$, $R^4$ Wasserstoff oder $C_1$- bis $C_{18}$-Alkylgruppen, die durch ein oder mehrere nicht benachbarte Sauerstoffatome unterbrochen sein und zusätzlich eine Hydroxyl- oder eine Aminogruppe tragen können,

$B^3$ eine Einfachbindung oder eine $C_1$-$C_4$-Alkylengruppe,

wobei die Verbindungen Ib unter Abspaltung der Reste $R^3$ und $R^4$ und einer Gruppierung Y einen fünf- oder sechsgliedrigen Ring bilden können, mit der Maßgabe, daß die Verbindung Ia bzw. Ib mindestens eine mit Isocyanaten reaktionsfähige Gruppe trägt.

Beispiele für Verbindungen Ia sind Acrylsäure, Methacrylsäure, Crotonsäure, 2-Hydroxyethylacrylat, 2-Hydroxyethylmethacrylat, 3-Hydroxypropylacrylat, 3-Hydroxypropylmethacrylat, 2-Aminoethylacrylat, 2-Aminoethylmethacrylat, 3-Aminopropylacrylat, 3-Aminopropylmethacrylat, Acrylsäureamid, Methacrylsäureamid, N-(2-Hydroxyethyl)acrylsäureamid und N-(3-Hydroxypropyl)methacrylsäureamid.

Beispiele für Verbindungen Ib sind Maleinsäure, Fumarsäure, Itaconsäure, Maleinsäureanhydrid und Itaconsäureanhydrid, weiterhin Maleinsäuremonomethylester,Maleinsäuremonoethylester, Maleinsäuremonobutylester, Maleinsäuremono-2-ethylhexylester, Maleinsäuremonodecylester, Maleinsäuremonododecylester, Maleinsäuremonomyristylester, Maleinsäuremonocetylester, Maleinsäuremonostearylester sowie die entsprechenden Fumarsäuremonoalkylester.

Den in den Copolymerlatices enthaltenen Kunstharzen A liegen als Monomere (b) vor allem Verbindungen aus den folgenden Substanzklassen vor:

- $\alpha,\beta$-ungesättigte Carbonsäureester der allgemeinen Formel IIa

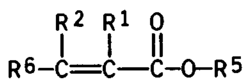

IIa

- Vinylester der allgemeinen Formel IIb

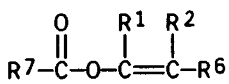

IIb

- Vinylbenzole der allgemeinen Formel IIc

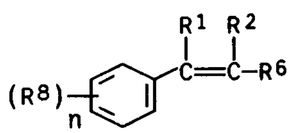

IIc

- ungesättigte aliphatische Kohlenwasserstoffe mit 4 bis 8 C-Atomen der allgemeinen Formel IId

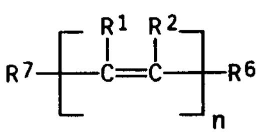

IId

Die Variablen haben hierbei folgende Bedeutungen:

| | |
|---|---|
| $R^5$ | eine $C_1$- bis $C_{18}$-Alkylgruppe, insbesondere eine $C_1$- bis $C_{12}$-Alkylgruppe, oder eine gesättigte oder ungesättigte $C_3$- bis $C_{10}$-Cyoalkylgruppe, insbesondere eine Cyclopentyl-, Cyclohexyl-, Cyclopentadienyl- oder Adamantylgruppe, |
| $R^6$, $R^7$ | Wasserstoff oder $C_1$- bis $C_{18}$-Alkylgruppen, insbesondere $C_1$-$C_{12}$-Alkylgruppen, |
| $R^8$ | Wasserstoff, $C_1$- bis $C_4$-Alkylgruppen, insbesondere Methyl- und Ethylgruppen, $C_1$- bis $C_4$-Alkoxygruppen, insbesondere Methoxy- und Ethoxygruppen, Chlor, Brom, Nitro oder Cyano, |
| n | 1 oder 2 |

Beispiele für Verbindungen IIa sind Acrylsäuremethylester, Acrylsäureethylester, Acrylsäurepropylester, Acrylsäureisopropylester, Acrylsäurebutylester, Acrylsäureisobutylester, Acrylsäure-sec.-butylester, Acrylsäure-tert.-butylester, Acrylsäurepentylester, Acrylsäureisopentylester, Acrylsäureneopentylester, Acrylsäurenonylester, Acrylsäureisononylester, Acrylsäuredecylester, Acrylsäuredodecylester, Acrylsäurecyclohexylester, Acrylsäurecyclopentadienylester und Acrylsäureadamantylester sowie die entsprechenden Methacrylsäureester.

Beispiele für Verbindungen IIb sind Vinylformiat, Vinylacetat und Vinylpropionat.

Beispiele für Verbindungen IIc sind Styrol und alkylsubstituierte Styrole wie 2-Methyl- und 4-Methylstyrol.

Beispiele für Verbindungen IId sind 1-Buten, 2-Buten, Isopren und Butadien.

Es sollten für das Kunstharz A nur solche Comonomeren (b) gewählt werden, deren entsprechende Homopolymerisate eine Glasübergangstemperatur ($T_G$) zwischen -45 und +50 °C aufweisen. Wenn eine kontinuierliche Filmbildung auf den beschichteten Untergründen ohne Weichmacherzusatz erfolgen soll, wird ein $T_G$-Bereich von -45 bis +25 °C bevorzugt. Soll zusätzlich eine starke Filmklebrigkeit des Bindemittels vermieden werden, wählt man vorteilhafterweise einen $T_G$-Bereich von -20 bis +25 °C.

Für eine gute Wasserfestigkeit der beschichteten Untergründe werden hydrophobere Comonomere (b) verwendet oder mitverwendet, beispielsweise tert.-Butylmethacrylat, n-Butylmethacrylat oder 2-Ethylhexylacrylat. Auch Cyclopentadienyl- oder Adamantylacrylate oder -methacrylate wirken sich günstig auf die Wasserfestigkeit aus.

Das Kunstharz A kann aus jeweils einer oder aus mehreren der Monomer-Komponenten (a) und (b) aufgebaut sein. Es kann vorteilhaft sein, eine Mischung aus Monomeren (b), welche eine niedrigere $T_G$, z.B. 2-Ethylhexylacrylat, n-Butylacrylat oder Ethylacrylat, und Monomeren (b), welche eine höhere $T_G$, z.B. Methylmethacrylat, tert.-Butylmethacrylat, Methylacrylat, Dodecylacrylat oder Styrol, aufweisen, zusammen mit einem oder mehreren Monomeren (a) als Komponenten für das Kunstharz A einzusetzen.

Bei der Herstellung der das Kunstharz A enthaltenden Copolymerlatices können die bekannten Herstellverfahren eingesetzt werden, um eine den Anforderungen entsprechende Latexpartikel-Morphologie zu erzeugen. Vor allem die folgenden Herstellungsverfahren kommen in Betracht:

- Dispergieren von Substanzcopolymeren in Wasser
- Dispergieren von gefällten Lösungscopolymeren in Wasser
- Suspensionscopolymerisation in Wasser
- Emulsionscopolymerisation in Wasser
- Herstellen von Sekundärdispersionen

Die Emulsionspolymerisation in Wasser hat sich als besonders günstig erwiesen.

Je nach Herstellverfahren kann man eine Batch-, halbkontinuierliche oder kontinuierliche Emulsion- oder Monomerzulauf-Fahrweise oder ein Saat-Polymerisationsverfahren wählen. Die Emulsion- bzw. Monomerzuläufe können zeitlich konstant aufeinanderfolgend oder zeitlich überlappend in einer Stufenfahrweise oder zeitlich zu- oder abnehmend aufeinanderfolgend oder zeitlich überlappend in einer Gradientenfahrweise dem Reaktionskessel zugeführt werden. Diese Angaben gelten auch für die Initiatorzuläufe, falls diese getrennt dosiert werden.

Bei einer im Sinne der Erfindung bevorzugten Partikel-Morphologie sind die isocyanatreaktiven funktionellen Gruppen vorzugsweise an der Oberfläche und in den oberflächennahen Regionen des Latex-Partikels zu finden. So werden eine möglichst hohe Flexibilität mit hoher Vernetzungseffektivität verknüpft und dadurch hohe Naßfestigkeit und optimale Bindemittelviskosität erreicht.

Dem Fachmann ist es bekannt und bedarf deshalb keiner weiteren Erläuterung, wie er je nach Herstellverfahren die verschiedenen Polymerisationsbedingungen einstellen muß, um die genannten bevorzugten Copolymerlatex-Morphologien zu erreichen.

Bei der Herstellung der geeigneten Latices können anionische oder nichtanionische Emulgatoren oder Schutzkolloide bekannter Art oder Mischungen hieraus verwendet werden. Als Beispiele für Emulgatoren seien mit 25 mol Ethylenoxid umgesetztes Nonylphenyl und mit 25 mol Ethylenoxid umgesetztes Natriumnonylphenolsulfonat, für Schutzkolloide Stärkederivate wie Carboxymethylcellulose und Polyvinylalkohol-Derivate erwähnt.

Die in den üblichen Mengen verwendeten Initiatoren können je nach Polymerisationsverfahren wasserlösliche oder in der organischen Phase lösliche Initiatoren wie thermisch zersetzbare Alkalimetall- und Ammoniumperoxide, z.B. Kaliumperoxodisulfat oder Ammoniumperoxodisulfat, organische Peroxide, z.B. tert.-Butylperoxid, oder Redoxinitiatoren wie Wasserstoffperoxid/Ascorbinsäure oder tert.-Butylhydroperoxid/Natrium-hydroxymethylsulfinat sein.

Der Polymergehalt der Copolymerlatices beträgt vorzugsweise 50 bis 55 Gew.-%. Entscheidend ist die Viskosität dieser Latices, die im Bereich von 200 bis 1500 mPas bei Raumtemperatur liegen sollte, um sedimentationsfreie Bindemittelkompositionen mit der verwendeten Polyisocyanat-Dispersion zu erhalten.

Die Herstellung der verwendeten wäßrigen stabilen Polyisocyanat-Dispersionen B ist in den Literaturstellen (3) und (4) ausführlich beschrieben. Bei der vorliegenden Erfindung wird die "Passivierung" der Polyisocyanat-Teilchenoberfläche gegenüber dem Reaktionspartner Wasser und gegenüber den isocyanatreaktiven Gruppen des Kunstharzes A ausgenutzt, um lagerstabile Einkomponentensysteme, die nach Lagerung ohne Reaktivitätsverlust eingesetzt werden können, herzustellen. Man spricht in diesem Zusammenhang auch von retardierter Reaktivität bzw. von retardierten wäßrigen Polyisocyanat-Dispersionen.

Diese Desaktivierung der Teilchenoberfläche bzw. Retardierung wird dadurch erreicht, daß nur die auf der Oberfläche der Teilchen befindlichen Isocyanatgruppen mit einem Desaktivierungsmittel reagieren und die im Inneren des Teilchens enthaltenen Polyisocyanatmoleküle an der Reaktion mit den Stoffen hindern,

die bekanntermaßen mit Isocyanaten reagieren. Nach der Desaktivierung der Polyisocyanate erhält man durch Dispergieren der Teilchen in einem Dispersionsmedium direkt stabile Dispersionen.

Als feste feinteilige Polyisocyanate eignen sich diejenigen Stoffe, die einen Schmelzpunkt oberhalb von 25 °C, vorzugsweise oberhalb von 40 °C haben. Hierzu gehören aliphatische, araliphatische, aromatische und heterocyclische Polyisocyanate, Polyphenyl-polymethylen-polyisocyanate, die durch Anilin-Formaldehyd-Kondensation und anschließende Phosgenierung erhalten werden, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethan- oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, ferner Uretdiongruppen aufweisende Diisocyanate und Harnstoffgruppen aufweisende Diisocyanate. Als Beispiele für derartige geeignete Polyisocyanate seien im einzelnen genannt:

| | |
|---|---|
| p-Xylylendiisocyanat | Schmp. 45-46 °C |
| 1,5-Diisocyanatomethylnaphthalin | 88-89 °C |
| 1,3-Phenylendiisocyanat | 51 °C |
| 1,4-Phenylendiisocyanat | 94-96 °C |
| 1-Methylbenzol-2,5-diisocyanat | 39 °C |
| 1,3-Dimethylbenzol-4,6-diisocyanat | 70-71 °C |
| 1,4-Dimethylbenzol-2,5-diisocyanat | 76 °C |
| 1-Nitrobenzol-2,5-diisocyanat | 59-61 °C |
| 1,4-Dichlorbenzol-2,5-diisocyanat | 134-137 °C |
| 1-Methoxybenzol-2,4-diisocyanat | Schmp. 75 °C |
| 1-Methoxybenzol-2,5-diisocyanat | 89 °C |
| 1,3-Dimethoxybenzol-4,6-diisocyanat | 125 °C |
| Azobenzol-4,4'-diisocyanat | 158-161 °C |
| Diphenylether-4,4'-diisocyanat | 66-68 °C |
| Diphenylmethan-4,4'-diisocyanat | 42 °C |
| Diphenyl-dimethylmethan-4,4'-diisocyanat | 92 °C |
| Naphthalin-1,5-diisocyanat | 130-132 °C |
| 3,3'-Dimethylbiphenyl-4,4'-diisocyanat | 68-69 °C |
| Diphenyldisulfid-4,4'-diisocyanat | 58-60 °C |
| Diphenylsulfon-4,4'-diisocyanat | 154 °C |
| 1-Methylbenzol-2,4,6-triisocyanat | 75 °C |
| 1,3,5-Trimethylbenzol-2,4,6-triisocyanat | 93 °C |
| Triphenylmethan-4,4',4''-triisocyanat | 89-90 °C |
| 4,4'-Diisocyanato-1,2-diphenyl-ethan | 88-90 °C |
| dimeres 1-Methyl-2,4-phenylendiisocyanat | 156 °C |
| dimeres 1-Isopropyl-2,4-phenylendiisocyanat | 125 °C |
| dimeres 1-Chlor-2,4-phenylendiisocyanat | 177 °C |
| dimeres 2,4'-Diisocyanato-diphenylsulfid | 178-180 °C |

dimeres Diphenylmethan-4,4'-diisocyanat
3,3'-Diisocyanato-4,4'-dimethyl-N,N'-diphenylharnstoff
N,N'-Bis[4(4-Isocyanatophenylmethyl)phenyl]harnstoff
N,N'-Bis[4(2-Isocyanatophenylmethyl)phenyl]harnstoff

In einer bevorzugten Ausführungsform werden als Komponente B der erfindungsgemäßen wäßrigen Zubereitungen als feinteilige stabilisierte Polyisocyanate araliphatische oder aromatische Di-, Tri- oder Tetraisocyanate, die in ihren dimeren Formen vorliegen können, eingesetzt. Vertreter dieser bevorzugten Komponenten B sind z.B. 1,5-Naphthalindiisocyanat, 3,3'-Diisocyanato-4,4'-dimethyl-N,N'-diphenylharnstoff, dimeres 1-Methyl-2,4-phenylendiisocyant, dimeres 4,4'-Diisocyanatodiphenylmethan und 3,3'-Dimethyl-4,4'-diisocyanato-diphenyl.

Die Polyisocyanate können mit den Methoden desaktiviert werden, die in den oben angegebenen Schriften (3) und (4) beschrieben sind. Zur Desaktivierung eignen sich beispielsweise Verbindungen mit Hydroxylgruppen, Carboxylgruppen, Amidgruppen und Mercaptangruppen. Verbindungen dieser Art bilden auf der Oberfläche der Polyisocyanatteilchen eine Art Polymerumhüllung, indem sie selektiv mit den Isocyanatgruppen reagieren, die sich auf der Teilchenoberfläche befinden. Dadurch wird die Polymerumhüllung fest an die Polyisocyanatteilchen gebunden, ohne daß dabei wesentliche Anteile der insgesamt vorhandenen Isocyanatgruppen in den Polyisocyanatteilchen verbraucht werden.

Besonders geeignet zur Desaktivierung der Isocyanatgruppen an der Oberfläche der Polyisocyanatteilchen sind Reaktionen, die die Isocyanatgruppen zu Harnstoff- bzw. Polyharnstoff-Strukturen umwandeln. Solche Desaktivierungsmittel sind beispielsweise Wasser und primäre oder sekundäre Amine. Zur Desaktivierung der Teilchenoberflächen der Polyisocyanate können auch zwei- oder mehrfunktionelle, nieder- oder höhermolekulare Verbindungen mit aliphatisch gebundenen, primären oder sekundären Aminogruppen oder $-CO-NH-NH_2$-Endgruppen oder Hydrazine mit einem Molekulargewicht von 32 bis etwa 60 000, vorzugsweise 60 bis 3 000, eingesetzt werden. Es sind dies z.B. niedermolekulare oder höhermolekulare primäre oder sekundäre Polyamine, vorzugsweise Diamine. Die Aminogruppen sind dabei im allgemeinen an aliphatische Gruppen, an cycloaliphatische Gruppen, oder an den aliphatischen Rest von araliphatischen Gruppen gebunden.

Weiterhin können Hydrazin (meist in Form von Hydrazinhydrat), oder Alkylsubstituierte Hydrazine wie N,N-Dimethylhydrazin eingesetzt werden. Zur Desaktivierung der Oberfläche der Polyisocyanate eignen sich außerdem Verbindungen mit Hydrazin-Endgruppen, z.B. Dihydrazide, wie Oxalsäuredihydrazid, Adipinsäuredihydrazid, Terephthalsäuredihydrazid oder Verbindungen mit Hydrazid- und Semicarbazid-, Carbazinester- oder Aminogruppen, z.B. $\beta$-Semicarbazidoalanylhydrazid, 2-Semicarbazidoethylencarbazinester, Aminoessigsäurehydrazid, $\beta$-Aminopropionsäurehydrazid oder Ethylen-bis-carbazinester bzw. Ethylen-bis-semicarbazid, sowie Polyhydrazide, die durch Hydrazinolyse von Polyacrylaten erhalten werden.

Bevorzugt sind jedoch im wesentlichen aliphatische bzw. cycloaliphatische Di- und Polyamine, die gegebenenfalls neben den Aminogruppen auch noch OH-Gruppen, tertiäre Aminogruppen, Ethergruppen, Thioethergruppen, Urethangruppen oder Harnstoffgruppen aufweisen können.

Vorzugsweise werden folgende Di- und Polyamine verwendet:

- lineare $\alpha,\omega$-$C_2$- bis $C_{12}$-Diaminoalkane, z.B. 1,4-Butandiamin, 1,6-Hexandiamin, 1,10-Decandiamin, 1,11-Undecandiamin oder 1,12-Dodecandiamin;
- verzweigte $\alpha,\omega$-Diaminoalkane, z.B. Neopentandiamin, 2,2,4- oder 2,4,4-Trimethyl-1,6-diaminohexan, 2,5-Dimethyl-2,5-diaminohexan oder 2,2-Dimethyl-1,5-diaminopentan;
- Diaminoalkylcycloalkane, z.B. Bis-aminomethylhexahydro-4,7-methanoindan (TCD-Amin);
- Mono-, Di- und Trialkyl-cyclohexandiamine, z.B. 1,3- oder 1,4-Cyclohexandiamin, 1-Amino-3,3,5-trimethyl-5-aminomethyl-cyclohexan (Isophorondiamin), 2,4- oder 2,6-Diamino-3,5-diethyl-1-methylcyclohexan;
- Arylendiamine, z.B. p- oder m-Xylylendiamin;
- Bis($\omega$-aminoalkyl)alkylamine, z.B. Bis(3-aminopropyl)methylamin;
- Triaminoalkane und -cycloalkane, z.B. 1,5,11-Triaminoundecan oder 4-Aminomethyl-1,8-diaminooctan;
- Diamino-dicyclohexylmethane, z.B. 2,4'- oder 4,4'-Diaminodicyclohexylmethan, 3,3-Dimethyl-5,5'-diamino-dicyclohexylmethan oder 3,5-Diisoproypl-3',5'-diethyl-4,4'-diaminodicyclohexylmethan;
- perhydrierte kondensierte Diaminoaromaten, z.B. perhydrierte Diaminonaphthaline oder -anthracene;
- höherkondensierte aliphatische und cycloaliphatische Amine, z.B. Diethylentriamin oder Tripropylentetramin;
- N,N'-Dialkyl-alkylendiamine, z.B. N,N'-Dimethylethylendiamin;
- Piperazin und Piperazinderivate, z.B. Piperazinhydrat, 2-Methylpiperazin, 2-(2-Hydroxyethyl)piperazin;
- Polyalkylenoxy-diamine, z.B. 4,7-Dioxadecan-1,10-diamin.

Neben diesen niedermolekularen Diaminen oder im Gemisch mit diesen können auch höhermolekulare Di- und Polyamine verwendet werden, wie sie z.B. durch Aminieren von Polyoxyalkylenglykolen mit Ammoniak erhältlich sind.

Weitere sehr gut geeignete und deshalb ebenfalls bevorzugte höhermolekulare Polyamine sind die durch Polykondensation aus Polycarbonsäuren, z.B. polymerer Leinölfettsäure, mit einem Überschuß an Di- und Triaminen hergestellten handelsüblichen Stoffe ("Polyamidamine"). Diese höhermolekularen Polyamine besitzen Molekulargewichte von etwa 400 bis 6 000, vorzugsweise 400 bis 3 000. Infolge ihres Aufbaus sind derartige höhermolekulare Polyamine zur Ausbildung einer nichtbrüchigen, "elastischen" Polyharnstoffumhüllung besonders geeignet. Sie werden daher, vorzugsweise in Mischung mit den niedermolekularen Di- und Polyaminoverbindungen, zur Desaktivierung der Oberfläche der Polyisocyanatteilchen eingesetzt.

Selbstverständlich können beliebige Kombinationen der genannten Amin-, Hydrazin- und Hydrazid-Verbindungen verwendet werden, um z.B. nachteilige Nebeneffekte eines Amines durch entsprechende Vorteile anderer Amine auszugleichen (z.B. nieder- und höhermolekulare Diamine in gemeinsamer Anwendung) oder um möglichst viele vorteilhafte Nebeneffekte zu vereinigen. In Frage kommen z.B. Kombinationen von schnell reagierenden Aminen wie z.B. Ethylendiamin mit durch sterische Hinderung verlangsamten Aminen oder von niedermolekularen Aminen oder Hydrazinen mit hochmolekularen Aminen wie z.B. aliphatischen Aminopolyethern.

Um die Desaktivierung zu steuern und zu beschleunigen, können auch Katalysatoren zugegeben werden. Bevorzugt sind Katalysatoren, die selektiv die Desaktivierung beschleunigen. Die Desaktivierungskatalysatoren können aber auch identisch sein mit den später die bestimmungsgemäße wärmeaktivierte Reaktion beschleunigenden oder steuernden Katalysatoren.

Die festen, feinteiligen Polyisocyanate können praktisch in jedem beliebigen oberhalb von 20°C flüssigen Dispersionsmedium dispergiert werden, z.B. in Alkoholen, Polyolen, Aminen, Ethern, Ketonen, Estern, Carbonsäuren, aliphatischen oder aromatischen Kohlenwasserstoffen, halogenierten Kohlenwasserstoffen und Wasser. Für die erfindungsgemäßen, die feinteiligen Polyisocyanate enthaltenden wäßrigen Zubereitungen verwendet man bevorzugt als Dispersionsmedium Wasser oder Mischungen von Paraffinöl, Benzin des Siedebereichs von 140 bis 250°C, Xylol oder Toluol mit Wasser. Besonders bevorzugt wird jedoch Wasser allein.

Die bekannten feinteiligen Polyisocyanat-Dispersionen haben eine sehr breite Teilchengrößenverteilung und sind in dieser Form für die erfindungsgemäße Verwendung weniger geeignet. Sie können jedoch sehr leicht in eine geeignetere Form übergeführt werden, indem man diese Polyisocyanat-Dispersionen auf eine mittlere Teilchengröße von 0,1 bis 15, vorzugsweise 0,5 bis 5 µm bringt (bestimmt mit der Scheibenzentrifuge nach Joice Label). Die Herstellung derartig feinteiliger Polyisocyanat-Dispersionen gelingt sehr einfach, indem man die bekannten Dispersionen einer Feindispergierung oder Mahlung unterwirft. Hierfür eignen sich beispielsweise schnell-laufende Dissolver- oder Dispergiergeräte vom Rotor/Startor-Typ oder Rührwerkskugelmühlen, Perl- und Sandmühlen, Kugelmühlen und Reibspaltmühlen. Vorzugsweise erhält man die erfindungsgemäß zu verwendenden feinteiligen Polyisocyanat-Dispersionen durch Vermahlen von desaktivierten festen, feinteiligen Polyisocyanaten. Falls das Vermahlen der Polyisocyanate in Gegenwart von Stoffen vorgenommen wird, die mit Isocyanatgruppen reagieren, darf die Temperatur beim Mahlen 50°C nicht überschreiten. Vorzugsweise erfolgt das Mahlen im Temperaturbereich von 0 bis 40, insbesondere 10 bis 40°C.

Beim Erhitzen der feinteiligen Polyisocyanat-Dispersionen auf höhere Temperaturen, z.B. auf Temperaturen oberhalb von 60°C, wird die Desaktivierung der Oberfläche der Polyisocyanatteilchen aufgehoben und es kommt zu einer Reaktion der Polyisocyanate mit den Verbindungen, die mit Isocyanatgruppen reagieren.

Beim Mahlen kann man zusätzlich grenzflächenaktive Stoffe bzw. Schutzkolloide verwenden, um besonders stabile Polyisocyanat-Dispersionen herzustellen. Geeignete grenzflächenaktive Stoffe sind übliche anionische, kationische oder neutrale Tenside, z.B. Sorbitanfettsäureester, Polyoxyethylensorbitan-Fettsäureester, Arylsulfonate, Alkalisalze höherer Fettsäuren, oxethylierte Amine wie oxethyliertes Oleylamin, Sulfobernsteinsäureester, Soja-Lecithin, ethoxylierte Fettsäureester, propoxylierte Fettsäureester sowie Kondensationsprodukte aus Phenolsulfonsäuren, Harnstoff und Formaldehyd. Außerdem kann man viskositätsregelnde Stoffe wie Celluloseether, Methylcellulose, polymere Säuren und Salze polymerer Säuren (z.B. Polyacrylsäure), natürliche und synthetische Polysaccharide und Eiweißprodukte, kationische Stärke, Polyacrylamide, Polyvinylalkohole und Polyvinylether verwenden.

Als Dispergiermittel•C, die in einer wirksamen Menge vorliegen müssen, welche je nach verwendetem System unterschiedlich sein und deshalb nur schwer in exakten Zahlenwertbereichen ausgedrückt werden kann, dienen beispielsweise die oben genannten grenzflächenaktiven Stoffe bzw. Schutzkolloide, welche schon vor oder während des Mahlvorgangs der Polyisocyanate A zugegeben werden können. Hierunter fallen auch die Dispergiermittel und Emulgatoren, welche während der Herstellung des Copolymerlatex zugesetzt werden können, z.B. ethoxyliertes Nonylphenol und Natriumnonylphenolsulfonat.

Als feinteilige Füllstoffe D eignen sich vor allem inerte anorganische Materialien und Pigmente, z.B. Bariumsulfat, Aluminiumoxid und Titanoxid.

Die erfindungsgemäßen wäßrigen Zubereitungen enthalten 5 bis 40, vorzugsweise 15 bis 40 Gew.-% der Komponente A, 0,5 bis 5, vorzugsweise 0,5 bis 3 Gew.-% der Komponente B, 5 bis 40, vorzugsweise 15 bis 40 Gew.-% der Komponente D sowie Dispergiermittel C, mindestens 20 Gew.-%, vorzugsweise mindestens 30 Gew.-% Wasser und gegebenenfalls weitere übliche Dispergiermedien und Hilfsstoffe.

Als weitere übliche Dispergiermedien sind die oben für die Polyisocyanate B aufgeführten anzusehen. Als übliche Hilfsstoffe können beispielsweise die oben genannten viskositätsregelnden Stoffe, übliche Schaumstabilisatoren und übliche Porenregulatoren verwendet werden.

Das Molverhältnis der in den Kunstharzen A enthaltenen, mit Isocyanatgruppen reagierenden funktionellen Gruppen zu den "freien", d.h. nicht stabilisierten Isocyanatgruppen der Polyisocyanate B sollte zwischen 2:1 und 1:2 liegen.

Das Gewichtsverhältnis des Kunstharzes A zum Füllstoff D sollte von 1:2 bis 2:1 betragen.

Die erfindungsgemäßen wäßrigen Zubereitungen, welche als Komponenten Kunstharze A, Polyisocyanate B, Dispergiermittel C und Füllstoffe D enthalten, stellt man durch Mischen der aufgeführten Komponenten mit Wasser und gegebenenfalls weiteren üblichen Dispergiermedien und Hilfsstoffen her. Dabei können die Komponenten A bis D einzeln oder in Untergruppen mit Wasser, weiteren Dispergiermedien und Hilfsstoffen

gemischt und danach vereinigt oder es kann die Mischung der Komponenten A bis D als Ganzes mit Wasser, weiteren Dispergiermedien und Hilfsstoffen gemischt werden.

In einer bevorzugten Ausführungsform stellt man die erfindungsgemäßen wäßrigen Zubereitungen durch Mischen der die Kunstharze A enthaltenden wäßrigen Copolymerlatices mit wäßrigen Dispersionen der Polyisocyanate B und mit Dispergiermitteln C und anschließende Zugabe der Füllstoffe D und gegebenenfalls weiterer üblicher Hilfsstoffe her.

Die erfindungsgemäße Kombination der wäßrigen funktionalisierten Copolymerlatices mit bevorzugt wäßrigen, retardierten Polyisocyanat-Dispersionen ist besonders geeignet für geschäumte und nichtgeschäumte, gut haftende und naßfeste Beschichtungen auf gewebtem und nichtgewebtem Untergründen.

Als gewebte Untergründe können vor allem textile Materialien aus Baumwolle, Zellwolle, Polyester, Polyamid und Polypropylen eingesetzt werden. Als nichtgewebte Untergründe können insbesondere natürliche oder synthetische Ledermaterialien und Vliese aus Polyester, Polyamid, Polypropylen oder Zellwolle verwendet werden.

Die Vernetzung der erfindungsgemäßen Kombination erfolgt erst bei höheren Temperaturen, also nach der Applikation und/oder während des Trocknens. Unter den üblichen Trocknungsbedingungen von mindestens 100-120 °C werden die Isocyanatgruppen freigesetzt und reagieren sofort mit den reaktiven Gruppen des Copolymeren ab.

Die erfindungsgemäßen wäßrigen Zubereitungen weisen eine ganze Reihe von Vorteilen auf. Bei den Zubereitungen wird überwiegend oder ganz auf organische Lösungsmittel als Dispergiermedien verzichtet, was aus ökologischer Sicht begrüßenswert ist. Die Verwendung eines Einkomponentensystems anstelle der bisher üblicherweise auch noch benutzten Zweikomponentensysteme stellte eine deutliche Vereinfachung dar. Gegenüber den vollständig verkappten oder blockierten Isocyanatsystemen des Standes der Technik haben die erfindungsgemäßen wäßrigen Zubereitungen den Vorteil, daß beim Beschichtungsvorgang keine oder nur ganz geringe Mengen an die Beschichtungsqualität vermindernden und gesundheitsschädigenden Abspaltprodukten aus den Verkappungsmitteln freigesetzt werden.

Da die verwendeten Polyisocyanat-Disperisonen nur feste, nicht flüchtige Polyisocyanate enthalten, erfolgt beim Erwärmen und Trocknen der beschichteten Untergründe keine Emission von unerwünschten oder schädigenden Polyisocyanaten oder daraus abgeleiteten Verbindungen. Da die retardierten Polyisocyanat-Dispersionen in solchen Mengen eingesetzt werden, daß die Isocyanatgruppen vollständig oder nahezu vollständig mit den funktionellen Gruppen des Kunstharzes A abreagieren, wird ein Überschuß an Isocyanat in der Formulierung und dadurch die Bildung von Rückständen vermieden.

Die erfindungsgemäßen wäßrigen Dispersionen zeigen trotz Vorliegen eines Einkomponentensystems eine hohe Lagerstabilität; so sind nach 6 Monaten noch kein merklicher Anstieg der Viskosität, keine Sedimentationen und kein nennenswerter Reaktivitätsverlust festzustellen. Die Topfzeit beträgt 1 bis 2 Jahre oder noch länger.

Die mit den erfindungsgemäßen wäßrigen Dispersionen beschichteten Untergründe zeigen hervorragende anwendungstechnische Eigenschaften. Die geschäumten oder nichtgeschäumten Beschichtungen weisen eine hohe Naßfestigkeit auf, haften gut auf dem Untergrund, sind flexibel und verformbar und zeigen eine deutliche schallisolierende Wirkung. Weiterhin haben so beschichtete textile Gewebe eine geringere Steifigkeit und fühlen sich deshalb weicher an. Bei der chemischen Reinigung so beschichteter textiler Gewebe ist der Auswaschverlust deutlich geringer.

Beispiele

Beispiel 1

Herstellung von Kunstharz A enthaltendem Copolymerlatex

In einem üblichen Polymerisationsreaktor wurde eine wäßrige Emulsion aus
3,6 g Acrylsäure
1,5 g Acrylsäureamid
7,2 g 3-Hydroxypropylacrylat
18,5 g Styrol
58,0 g 2-Ethylhexylacrylat
61,2 g n-Butylacrylat
1,8 g mit 25 mol Ethylenoxid umgesetztem Nonylphenol
1,8 g mit 25 mol Ethylenoxid umgesetztem Natriumnonylphenolsulfonat in 85 g Wasser
einer Emulsionspolymerisation unterworfen. Dazu wurden 1% der Emulsion zusammen mit 5 % einer

Lösung von 1,3 g Natriumperoxodisulfat in 50 g Wasser und 10 % einer Lösung von 0,6 g Natrium-hydroxymethylsulfinat in 50 g Wasser vorgelegt und 15 min bei 45 °C anpolymerisiert. Die restliche Menge der Emulsion wurde zusammen mit 55 % der Natriumperoxodisulfat-Lösung und 50 % der Natrium-hydroxymethylsulfinat-Lösung innerhalb von 80 min bei 45 °C zugegeben.

Danach wurde eine zweite wäßrige Emulsion aus

3,6 g Acrylsäure
1,5 g Acrylsäureamid
4,7 g 3-Hydroxypropylacrylat
17,2 g Methylmethacrylat
9,1 g Styrol
31,1 g 2-Ethylhexylacrylat
32,8 g n-Butylacrylat
1,8 g mit 25 mol Ethylenoxid umgesetztem Nonylphenol
1,8 g mit 25 mol Ethylenoxid umgesetztem Natriumnonylphenolsulfonat in 60 g Wasser

innerhalb von 50 min bei 45 °C zusammen mit den restlichen Mengen der Natriumperoxodisulfat- und der Natrium-hydroxymethylsulfinat-Lösung zudosiert. Anschließend wurde 2 Stunden bei 70 °C nachpolymerisiert und zur Stabilisierung des Dispersion mit jeweils weiteren 2,5 g der beiden o.g. Emulgatoren versetzt.

Der erhaltene Copolymerlatex hatte einen Feststoffgehalt von 52 Gew.-%, eine Viskosität von 550 mPa•s, einen pH-Wert von 4,8-5,0 und eine Lichtdurchlässigkeit von 62 % (0,01 gew.-%ige Dispersion).

Beispiele 2a und 2b

Textilbeschichtung mit geschäumter Copolymerlatex-Polyisocyanat-Dispersion

Eine wäßrige Zubereitung aus

| | |
|---|---|
| 192 g | des Copolymerlatex aus Beispiel 1 |
| 8,6 g | üblicher Schaumstabilisatoren |
| 0,3 g | eines üblichen Porenregulators |
| 80 g | Bariumsulfat |
| 20 g | Aluminiumoxid |
| 5 g | Titandioxid |
| 7,5 g | einer 40 gew.-%igen wäßrigen Polyisocyanat-Dispersion, hergestellt aus dimerem 1-Methyl-2,4-phenylendiisocyanat, dessen Isocyanatgruppen zu 20 % mit einem handelsüblichen Polyamidamin desaktiviert vorlagen und das eine mittlere Teilchengröße von 1 bis 5 µm aufwies, |

wurde mit Luft in einem Mixer 2 bis 3 min verschäumt, in einer Stärke von 7 mm auf Baumwollgewebe aufgetragen und 20 min bei 150 °C getrocknet, wobei während dieses Trocknungsvorganges die Vernetzung des Mittels erfolgte (Beispiel 2a).

Das Verhältnis der Molzahl der im Kunstharz des Copolymerlatex vorliegenden funktionellen Gruppen (COOH, $CONH_2$ und OH) zur Molzahl der im Polyisocyanat vorliegenden "freien", d.h. nicht desaktivierten Isocyanatgruppen betrug 1,4:1.

Der um den Faktor 100 vergrößerte Ansatz wurde im Technikumsmaßstab wiederholt (Beispiel 2b), wobei abweichend vom Versuch im Labormaßstab die Beschichtsstärke 5 mm und die Trocknungsdauer bei 150 °C 15 min betrug.

Tabelle 1 zeigt die Daten der hierbei erhaltenen Beschichtungen.

Tabelle 1: Daten der Beschichtungsmasse von Beispiel 2a und 2b

| Eigenschaft | Beispiel 2a | Beispiel 2b |
|---|---|---|
| Viskosität | 1500 mPa·s | 1840 mPa·s |
| Litergewicht | 260 g | 247 g |
| effektive Schaumhöhe (im Vergleich zum Naßauftrag) | 95 % | 93 % |
| Schaumoberfläche | glatt | glatt |
| Porenstruktur | mittel bis fein | mittel bis fein |
| Sprungelastizität (Fingernageltest) | gut | gut |
| Restverformung (22 h/70°C, 50 % Stauchung) | 10 % | 8,8 % |
| Kohäsion, trocken | 191 $N/25\ cm^2$ | 199 $N/25\ cm^2$ |
| Kohäsion, naß | 135 $N/25\ cm^2$ | 135 $N/25\ cm^2$ |
| Abfall der Kohäsion | 29,5 % | 32 % |
| Stauchhärte | 62 $N/25\ cm^2$ | 67 $N/25\ cm^2$ |
| Knicktest (mit der Hand) | rißfrei | rißfrei |
| Schaumviskosität bei Auftrag auf das Gewebe | fast fließend bis steif | mäßig fließend |

Beispiel 3

Textilbeschichtung mit nicht geschäumter Copolymerlatex-Polyisocyanat-Dispersion

Eine wäßrige Zubereitung aus

| | |
|---|---|
| 192 g | des Copolymerlatex aus Beispiel 1 |
| 1 g | eines üblichen blauen Pigmentfarbstoffes für den Textildruck und die Textilfärbung |
| 0,2 g | eines üblichen Entschäumers |
| 10 g | Titandioxid |
| 10 g | Aluminiumoxid |

80 g Bariumsulfat
7,5 g der Polyisocyanat-Dispersion aus Beispiel 2a
wurde auf Baumwoll-Polyester-Gewebe gleichmäßig in einer Stärke von ca. 40 bis 50 g/m² aufgetragen und 7 min bei 150° C getrocknet.

Tabelle 2 zeigt die Daten des erhaltenen Gewebes im Vergleich zu mit handelsüblichem Acrylsäureester/Acrylnitril-Copolymerisat beschichtetem Gewebe.

Tabelle 2: Gewebedaten von Beispiel 3

| Eigenschaft | beschichtetes Gewebe | mit Acrylsäureester/ Acrylnitril-Copolymerisat beschichtetes Gewebe (zum Vergleich) |
|---|---|---|
| Viskosität der Beschichtungsmasse | 1610 mPa·s | 1580 mPa·s |
| Auftrag (getrocknet) | 46,5 g/m² | 45,7 g/m² |
| Steifigkeit, längs | 34 mN | 72 mN |
| Steifigkeit, quer | 16,5 mN | 31 mN |
| Waschmaschinentest (60°C): | | |
| Abrieb (naß) | Note 1-2 | Note 1-2 |
| Auswaschbarkeit (trocken) | 0,8 Gew.-% | 0,6 Gew.-% |
| Chemische Reinigung (30°C, 15 min, 99,5 Gew.-% Perchlorethylen und 0,5 Gew.-% Reinigungsverstärker): | | |
| Quellung (naß) | schwach | schwach |
| Abrieb (sofort) | 2-3 | 2 |
| Abrieb (nach 5 min) | Note 2-3 | Note 2 |
| Auswaschbarkeit (trocken) | 0,2 Gew.-% | 0,6 Gew.-% |

## Patentansprüche

1. Wäßrige Zubereitungen aus Copolymerlatices und Polyisocyanat-Dispersionen, enthaltend
   A) 5 bis 40 Gew.-% wenigstens eines Kunstharzes aus
      (a) 0,1 bis 20 Gew.-Teilen eines oder mehrerer monoolefinisch ungesättigter Monomerer, welche mindestens eine mit Isocyanaten reaktionsfähige Gruppe tragen, und
      (b) 80 bis 99,9 Gew.-Teilen eines oder mehrerer mit (a) copolymerisierbarer mono- oder diolefinisch ungesättigter Monomerer ohne acide Wasserstoffatome,
   B) 0,5 bis 5 Gew.-% wenigstens eines feinteiligen, stabilisierten Polyisocyanates,
   C) wirksame Mengen an Dispergiermitteln und
   D) 5 bis 40 Gew.-% wenigstens eines feinteiligen Füllstoffes.

2. Wäßrige Zubereitungen aus Copolymerlatices und Polyisocyanat-Dispersionen nach Anspruch 1, bei denen als Monomer (a) des Kunstharzes A eine Verbindung der allgemeinen Formel I

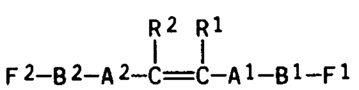

I

in der die Variablen folgende Bedeutung haben
$R^1$, $R^2$ Wasserstoff, Methyl oder Ethyl,

$A^1$, $A^2$ o-, m- oder p-Phenylen, eine divalente Gruppierung der Formel

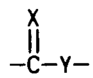

wobei X und Y für O, S, NH, $NCH_3$ oder $NC_2H_5$ stehen und das C-Atom direkt mit der olefinischen Doppelbindung verknüpft ist, oder eine Einfachbindung,

$B^1$, $B^2$ $C_1$- bis $C_{18}$-Alkylengruppen, die durch ein oder mehrere nicht benachbarte Sauerstoffatome unterbrochen sein und zusätzlich eine Hydroxyl- oder eine Aminogruppe tragen können, oder eine Einfachbindung,

$F^1$, $F^2$ Wasserstoff, $C_1$- bis $C_{18}$-Alkylgruppen, die durch ein oder mehrere nicht benachbarte Sauerstoffatome unterbrochen sein und zusätzlich eine Hydroxyl- oder eine Aminogruppe tragen können, sowie Reste der Formeln

$-Y-R^3$, 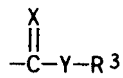 oder 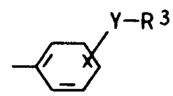

wobei $R^3$ Wasserstoff oder eine $C_1$- bis $C_{18}$-Alkylgruppe, die durch ein oder mehrere benachbarte Sauerstoffatome unterbrochen sein und zusätzlich eine Hydroxyl- oder eine Aminogruppe tragen kann, bezeichnet,

wobei die Gruppierungen $A^1$ und $A^2$ oder $A^1$ und $F^2$ über Y als Brückenglied zu einem fünf- oder sechsgliedrigen Ring verknüpft sein können, eingesetzt wird, mit der Maßgabe, daß die Verbindung I mindestens eine mit Isocyanaten reaktionsfähige Gruppe trägt.

**3.** Wäßrige Zubereitungen aus Copolymerlatices und Polyisocyanat-Dispersionen nach Anspruch 2, bei denen als Monomer (a) des Kunstharzes A eine Verbindung der allgemeinen Formeln Ia oder Ib

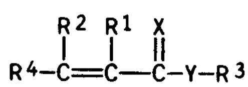 Ia

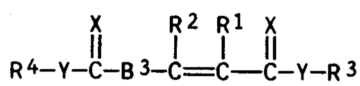 Ib

in denen die Variablen folgende Bedeutungen haben

$R^3$, $R^4$ Wasserstoff oder $C_1$- bis $C_{18}$-Alkylgruppen, die durch ein oder mehrere nicht benachbarte Sauerstoffatome unterbrochen sein und zusätzlich eine Hydroxyl- oder eine Aminogruppe tragen können,

$B^3$ eine Einfachbindung oder eine $C_1$- bis $C_4$-Alkylengruppe,

wobei die Verbindungen Ib unter Abspaltung der Reste $R^3$ und $R^4$ und einer Gruppierung Y einen fünf- oder sechsgliedrigen Ring bilden können, eingesetzt wird, mit der Maßgabe, daß die Verbindung Ia bzw. Ib mindestens eine mit Isocyanaten reaktionsfähige Gruppe trägt.

**4.** Wäßrige Zubereitungen aus Copolymerlatices und Polyisocyanat-Dispersionen nach den Ansprüchen 1 bis 3, bei denen als Monomer (b) des Kunstharzes A

- ein $\alpha,\beta$-ungesättigter Carbonsäureester der allgemeinen Formel IIa

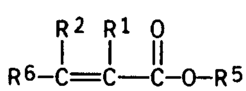 IIa

- ein Vinylester der allgemeinen Formel IIb

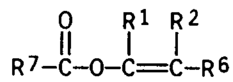

IIb

- ein Vinylbenzol der allgemeinen Formel IIc

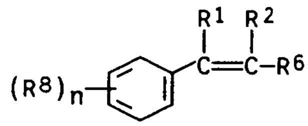

IIc

- oder ein ungesättigter aliphatischer Kohlenwasserstoff mit 4 bis 8 C-Atomen der allgemeinen Formel IId

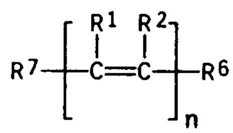

IId

in denen die Variablen folgende Bedeutung haben

| | |
|---|---|
| $R^5$ | eine $C_1$- bis $C_{18}$-Alkylgruppe oder eine gesättigte oder ungesättigte $C_3$- bis $C_{10}$-Cycloalkylgruppe, |
| $R^6$, $R^7$ | Wasserstoff oder $C_1$ bis $C_{18}$-Alkylgruppen, |
| $R^8$ | Wasserstoff, $C_1$- bis $C_4$-Alkylgruppen, $C_1$- bis $C_4$-Alkoxygruppen, Chlor, Brom, Nitro oder Cyano, |
| n | 1 oder 2, |

eingesetzt wird.

**5.** Wäßrige Zubereitungen aus Copolymerlatices und Polyisocyanat-Dispersionen nach den Ansprüchen 1 bis 4, bei denen als feinteilige, stabilisierte Polyisocyanate B araliphatische oder aromatische Di-, Tri- oder Tetraisocyanate, die in ihren dimeren Formen vorliegen können, eingesetzt werden.

**6.** Verfahren zur Herstellung wäßriger Zubereitungen aus Copolymerlatices und Polyisocyanat-Dispersionen gemäß den Ansprüchen 1 bis 5, dadurch gekennzeichnet, daß man die Komponenten A bis D mit Wasser und gegebenenfalls weiteren üblichen Dispergiermedien und Hilfsstoffen mischt.

**7.** Verfahren zur Herstellung wäßriger Zubereitungen aus Copolymerlatices und Polyisocyanat-Dispersionen nach Anspruch 6, dadurch gekennzeichnet, daß man die Kunstharze A enthaltende wäßrige Copolymerlatices mit wäßrigen Dispersionen der Polyisocyanate B und mit Dispergiermitteln C mischt und anschließend Füllstoffe D und gegebenenfalls weitere übliche Hilfsstoffe zugibt.

**8.** Verwendung von wäßrigen Zubereitungen aus Copolymerlatices und Polyisocyanat-Dispersionen gemäß den Ansprüchen 1 bis 5 als Beschichtungsmittel für gewebte und nichtgewebte Untergründe.